Europäisches Patentamt

European Patent Office

Office européen des brevets

(19)

(11) Publication number: **0 058 783**
**B1**

## EUROPEAN PATENT SPECIFICATION

(45) Date of publication of patent specification: **09.04.86**

(21) Application number: **81201234.2**

(22) Date of filing: **30.10.81**

(51) Int. Cl.⁴: **F 16 L 9/12**

(54) Tubing of hybrid, fibre-reinforced synthetic resin.

(30) Priority: **20.02.81 DE 3106273**

(43) Date of publication of application:
**01.09.82 Bulletin 82/35**

(45) Publication of the grant of the patent:
**09.04.86 Bulletin 86/15**

(84) Designated Contracting States:
**CH DE FR GB LI NL**

(56) References cited:
**DE-A-1 600 637**
**FR-A-2 319 069**
**FR-A-2 474 136**

(73) Proprietor: **Koninklijke Textielfabrieken**
**Nijverdal-Ten Cate N.V.**
**No. 3, E. Gorterstraat**
**NL-7607 GB Almelo (NL)**

(72) Inventor: **Pott, Richard**
**No. 33 Tannenbergstrasse**
**D-4937 Lage (DE)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a method of making a tubing of fibre reinforced synthetic resin as set out in the pre-characterising part of the claim. Such a method is known from for example DE—A—25 20 623.9.

Tubular bodies of fibre-reinforced synthetic resins are known per se as structural elements in many technical domains of application and in sports, for example, as masts of sailing vessels, surf boards and so on. They are manufactured by methods twining, drawing or winding of fibres or tissues.

It is known to combine various kinds of fibres for this purpose. In particular, DE—A—25 20 623.9 discloses such a fibre-winding method to manufacture tubes and driving shafts from reinforcement fibres in the combination of glass fibres and carbon fibres. The disadvantage of such a fibre hybrid is that the structural weight is still high because the glass fibre constituent has a high density. Moreover, the manufacture of tubular bodies by the method described requires extensive machinery. Likewise DT P 29 11 167.9 describes a driving shaft composed of various fibre-reinforced layers. Herein glass fibres in conjunction with carbon fibres are used in a stratified construction with well-defined fibre-winding angles, in which in a first instance the carbon fibres have to be disposed parallel to the longitudinal axis of the shaft. The disadvantage of such a stratified combination of various kinds of fibres is that the thermal expansions are different, which according to the material and to the fibre-orientation angles may give rise to a highly detrimental effect on the interlaminar shear resistance and hence to considerable loss of strength.

In the known methods resin-soaked glass or carbon fibres are applied to a cylindrical or conical mandril and subsequently cured by means of pressure and heat. After curing the tubular or shaft-shaped mandril serving as a positive mould is pressed out and as a result a conical tubing suitable for use as, for example, a surf mast is obtained. Largely in most cases the method described above is carried out by using exclusively glass fibres or carbon fibres. In the case of glass fibres the product, when having adequate tensile strength and bending resistance, is comparatively heavy. In the case of carbon fibres the product is highly brittle as a result of the slight bending expansion of the carbon fibres serving as reinforcing material. The sole advantage left by the exclusive use of carbon fibres is that the weight of the tubing is reduced by about one third, but the price is very high as a result of the many times higher price of carbon fibres as compared with glass fibres.

The invention, therefore, has for its object on the one hand to reduce dependence on the high price of carbon fibres and on the other hand to provide tubing of appreciably lower weight and reduced risk of breakdown. This is achieved according to the invention in that on an oval, square or round cross-section elongate mould body are deposited and soaked in synthetic resin tapes of parallel fibre strands or separate parallel fibre strands, the strands being of carbon fibres or aramide fibres which are arranged so that each fibre strand of aramide fibres is arranged at the side of a strand of carbon fibres or the strands being a combination of the two fibres, and in that an external layer comprising an elastically braided, woven or knitted hose of carbon or aramide fibres or a hybrid material of these two kinds of fibres is applied and saturated in resin, the tubing then being cured. Aramide fibres being a polymer of p-phenylenediamine and terephthaloyl dichloride.

A main problem in using fibre strands of small sectional area, which are alternately arranged as carbon fibres and aramide fibres parallel to one another rather than in separate layers of only one kind of fibre, is to avoid stress-induced relative movements liable to detract from the structural strength. By accurate fibre orientation in precise accordance with the requirements of the component and by an appropriate ratio between the carbon and aramide fibres preferably used as hydrid fibres an optimum reinforcement effect is obtained with minimum use of fibre, said effect being further enhanced by slipping in the last stage of the manufacture a braided hose of aramide/carbon fibre or a hybrid fibre of said two fibres onto the previously applied fibre material. After curing of the layer this braided hose constitutes the outer layer and has by its structure a lower surface stress so that it is less sensitive to cracking than a tubular body of smooth surface.

In the tubular body made according to the invention the combination of fibres of reduced breaking elongation and of high elasticity modulus, in this case carbon fibres, with fibres of higher breaking elongation and higher tensile strength, but lower specific weight, in this case aramide fibres, provides a markedly lower risk of fracture than in the tubings manufactured with only one kind of reinforcing fibre. The invention is based on the recognition of the fact that a hybrid fibre laminate of carbon and aramide fibres provides physical and economic advantages that could not be obtained by means of a single reinforcing fibre. For example, tubing of a purely aramide-fibre laminate would be useless for most applications, since this kind of fibre has only a low pressure resistance, whereas tubular bodies such as masts are exposed to high pressures.

A further feature of the invention resides in the orientation of the fibre bundle or tape of fibre bundles with respect to the longitudinal axis of the tubular body to the load- or application-dependent bending curve, for example, in the case of boat masts.

The fibres, preferably in the form of unidirectional tapes of alternating carbon fibre and aramide fibre strands in parallel relationship, to be embedded in the synthetic resin matrix of epoxide, polyester, phenol- or acryl resin are wound on a mandril of any shape as a positive mould or deposited thereon. In order to obtain a satisfactory torsional resistance, breaking resistance and bending resistance with a very low structural weight first a few separate layers are applied to the mould in the form of the above-mentioned, unidirectional tapes or separate fibre strands in radial to diagonal direction. Subsequently one or more separate layers or separate fibre strands of the same form are applied axially i.e. parallel to the longitudinal axis of the tubing and finally a braided hose of carbon fibres, aramide fibres or a hybrid of these two fibres is drawn onto the mandril serving as a mould. By its loosely twisted structure the braided hose can match the conicity, if any, of the positive mould and the previously wound or deposited reinforcement fibres and after suitable saturation with the resin matrix and curing of the tubing it constitutes the outer layer.

The drawing shows embodiments of the invention i.e. in

Fig. 1 an elevational view of the winding process using a turn of a tissue yarn and the enveloping in a braided hose on the mould,

Fig. 2 parts of separate layers of the tubing embodying the invention.

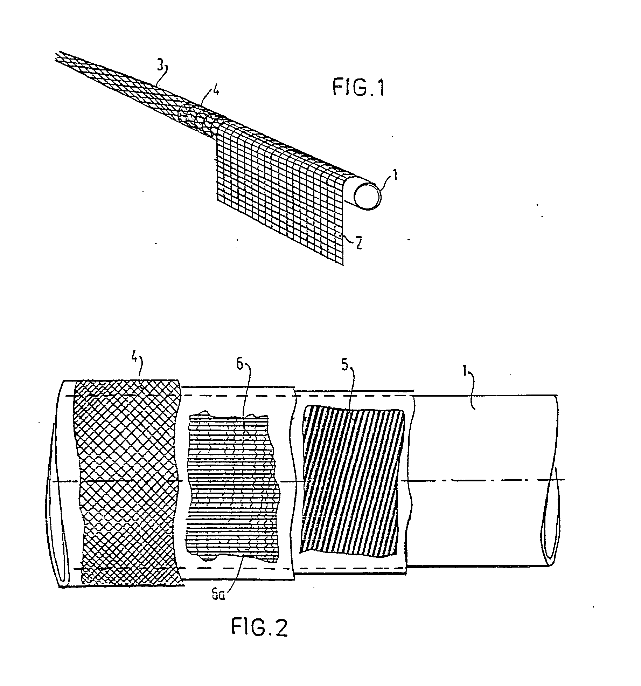

Fig. 1 shows a positive mould consisting of a tube 1 during winding of a tissue strip 2 of hybrid fibre tissue and reference numberal 3 designates the braided hose of carbon fibre, aramide fibre or a hybrid of the two kinds of fibres. In the region 4 of the tubing 1 forming the positive mould the braided hose 3 is already slipped onto the previously wound or deposited fibre strips or separate fibre strands of hybrid fibres and it constitutes the external sheath of the tubing.

Fig. 2 shows the first layer 5 of hybrid fibres in the form of a unidirectional tape or, respectively of separate fibre strands wound on the positive mould and orientated radially to diagonally with respect to the longitudinal axis of the tubing and reference numeral 6 designates a further layer of the same hybrid fibre material in axially orientated fibre strands, in which alternate carbon fibres and aramide fibres are in parallel relationship, whilst a warp thread 6a arranged at a larger spacing than the longitudinal strands holds together the fibre strands in a unidirectional tape. The last layer forming the external surface is formed by the braided hose 3 having a crosswise, diagonal fibre orientation. All reinforcing fibres are embedded in a resin matrix of epoxide, polyester, phenol- or acryl resin.

## Claim

A method of making a tubing of fibre reinforced synthetic resin in which the fibres are deposited in the direction of length of the tubing as well as wound in radial or diagonal planes with respect to the longitudinal axis, and including curing of the resin, characterized in that on an oval, square or round cross-section elongate mould body are deposited and soaked in synthetic resin tapes of parallel fibre strands or separate parallel fibre strands, the strands being of carbon fibres or aramide fibres which are arranged so that each fibre strand of aramide fibres is arranged at the side of a strand of carbon fibres or the strands being a combination of the two fibres, and in that an external layer comprising an elastically braided, woven or knitted hose of carbon or aramide fibres or a hybrid material of these two kinds of fibres is applied and saturated in resin, the tubing then being cured.

## Patentanspruch

Verfahren zur Herstellung eines Rohres aus faserverstärktem Kunstharz, bei welchem die Fasern in Längsrichtung des Rohres angeordnet sowie in radialen oder diagonalen Ebenen im Bezug zur Längsachse gewunden werden und das Harz ausgehärtet wird, dadurch gekennzeichnet, daß auf einem langgestreckten Formkörper ovalen, quadratischen oder runden Querschnitts Kunstharzbänder aus parallelen Fasersträngen oder getrennt parallelen Fasersträngen angeordnet und eingetränkt werden, wobei die Stränge aus Kohlenstoffasern oder Aramidfasern bestehen, welche derart angeordnet sind, daß jeder Faserstrang aus Aramidfasern auf der Seite eines Stranges aus Kohlenstoffasern angeordnet ist, oder wobei die Stränge aus einer Kombination der beiden Fasern bestehen, und daß eine äußere Schicht aus einem elastisch geflochtenen, gewebten oder gewirkten Schlauch aus Kohlenstoff- oder Aramidfasern oder einem Hybridmaterial aus diesen beiden Faserarten aufgebracht und kunstharzgesättigt wird, wobei das Rohr anschließend ausgehärtet wird.

## Revendication

Procédé de fabrication d'un tube de résine synthétique renforcée par des fibres, dans lequel les fibres sont déposées suivant la direction longitudinale du tube aussi bien qu'enroulées suivant des plans radiaux ou diagonaux par rapport à l'axe longitudinal, et comprenant le durcissement de la résine, caractérisé en ce que des rubans de brins de fibres parallèles ou des brins de fibres parallèles séparés sont déposés sur un corps de moule allongé à section ovale, carrée ou circulaire et sont imprégnés de résine synthétique, les brins étant en fibres de carbone ou en fibres d'aramide qui sont arrangées de manière à ce que chaque brin de fibre de fibres d'aramide soit disposé sur le côté d'un brin de fibres de carbone ou les brins étant une combinaison des deux fibres, et en ce qu'une couche externe comprenant une gaine tressée, tissée ou tricotée élastiquement de fibres de carbone ou d'aramide ou d'un matériau hybride de ces deux sortes de fibres est appliquée et saturée de résine, le tube étant ensuite durci.

FIG.1

FIG.2